# EUROPEAN PATENT APPLICATION

(11) **EP 4 733 173 A1**
(43) Date of publication of application: **29.04.2026**
(21) Application number: 25210567.1
(22) Date of filing: 22.10.2025
(51) Int. Cl.: B62D 5/30, B62D 5/07

(54) **WORKING VEHICLE**

(30) Priority: 28.10.2024 IN 202411082244
(71) Applicant: J.C. Bamford Excavators Limited, Uttoxeter Staffordshire ST14 5JP (GB)
(72) Inventor: Goddard, Colin, Uttoxeter, ST14 5JP (GB); Plant, Tom, Uttoxeter, ST14 5JP (GB); Thorpe, Henry, Uttoxeter, ST14 5JP (GB); Kumbhar, Prashant, Uttoxeter, ST14 5JP (GB)
(74) Representative: Hambley, Christopher John

(57) **Abstract**

A working vehicle (10) is provided comprising: at least one hydraulic actuator (102) for actuating a non-steering function of the working vehicle; and a steering system (120) comprising one or more steering cylinders (122), a primary pump (124) for supplying hydraulic fluid to the one or more steering cylinders in a normal steering mode, and a back-up system (130) for supplying hydraulic fluid to the one or more steering cylinders in a back-up steering mode. The back-up steering system comprises a secondary pump (134) for providing an alternative hydraulic fluid source for the one or more steering cylinders. The working vehicle comprises a control system (140) configured to simultaneously direct a flow of hydraulic fluid from the secondary pump to the one or more steering cylinders and to the at least one hydraulic actuator for simultaneously steering and actuating the non-steering function of the working vehicle.

## Description

### FIELD

The present disclosure relates to a working vehicle. Aspects of the invention relate to a working vehicle and to a method.

### BACKGROUND

It is known for working vehicles to have a steering system consisting of one or more steering cylinders and a pump for supplying hydraulic fluid to the one or more steering cylinders to steer the working vehicle. Such a steering system facilitates movement of the steering wheel by an operator of the working vehicle. However, in the event of a failure of the pump which supplies hydraulic fluid to the one or more steering cylinders, it may become very difficult, or even impossible, for the operator to steer the working vehicle without an alternative source of hydraulic fluid.

It is an aim of the present invention to address one or more of the disadvantages associated with the prior art.

### SUMMARY

The present teachings provide a working vehicle and a method according to the appended claims.

An aspect of the teachings provides a working vehicle. The working vehicle may comprise at least one hydraulic actuator for actuating a non-steering function of the working vehicle. The working vehicle may comprise a steering system comprising: one or more steering cylinders, and a primary pump for supplying hydraulic fluid to the one or more steering cylinders in a normal steering mode.

The steering system may comprise a back-up system for supplying hydraulic fluid to the one or more steering cylinders in a back-up steering mode. By having such a back-up system, an operator of the working vehicle may still be able to easily steer the working vehicle in the event of a failure of the primary pump.

The back-up system may comprise an accumulator for providing an alternative hydraulic fluid source for the one or more steering cylinders. Such an accumulator provides an alternative hydraulic fluid source in the event of a complete power failure of the working vehicle. In addition, the accumulator may provide an instant flow of hydraulic fluid, in contrast to alternatives such as back-up pumps which may have a delay in ramping up output.

The back-up system may comprise a secondary pump for providing an alternative hydraulic fluid source for the one or more steering cylinders. Such a secondary pump provides an alternative hydraulic fluid source that may be supplied for a longer period of time than alternatives, such as an accumulator. This may be useful, for example, for returning the working vehicle to a maintenance centre as opposed to just getting the working vehicle into a safe position (e.g., at a side of a road).

The back-up system may comprise an accumulator for providing a first alternative hydraulic fluid source for the one or more steering cylinders, and a secondary pump for providing a second alternative hydraulic fluid source for the one or more steering cylinders. By having both alternative hydraulic fluid sources, the accumulator can provide an instant source of pressurised hydraulic fluid while output from the secondary pump is increased, and then the secondary pump can continue to provide a back-up flow of hydraulic fluid over a longer period.

The working vehicle may comprise a control system configured in the back-up steering mode for simultaneously directing a flow of hydraulic fluid from the secondary pump to the one or more steering cylinders and to the at least one hydraulic actuator for simultaneously steering and actuating the non-steering function of the working vehicle.

Such a control system configured in the back-up steering mode for simultaneously directing a flow of hydraulic fluid from the secondary pump for simultaneously steering and actuating the non-steering function of the working vehicle allows less pumps to be used than in alternative configurations (e.g., in which the secondary pump is a dedicated back-up steering pump that does not drive any other actuators).

Optionally, the non-steering function comprises a propulsion function of the working vehicle. Optionally, the at least one hydraulic actuator comprises a hydraulic drive motor for propelling the working vehicle.

Simultaneously directing the flow of hydraulic fluid from the secondary pump to the one or more steering cylinders and the hydraulic drive motor ensures that the working vehicle can be steered whenever it is moving (i.e., in the operating conditions in which steering is required).

Optionally, the working vehicle comprises one or more working mode hydraulic actuators associated with movement of a working arm of the working vehicle and/or slewing a superstructure of the working vehicle relative to an undercarriage of the working vehicle and/or movement of a dozer blade of the working vehicle and/or movement of a stabiliser of the working vehicle.

Optionally, the control system is configured to inhibit flow of hydraulic fluid from the secondary pump to the one or more working mode hydraulic actuators when the flow of hydraulic fluid is being directed to the one or more steering cylinders in the back-up steering mode. In this way, steering and propulsion of the working vehicle can be prioritised in the event of a failure of the primary pump (e.g., to facilitate returning the working vehicle to a maintenance site for repair of the primary pump).

Optionally, the one or more steering cylinders are connected to the secondary pump by an emergency steering valve having an open state and a closed state. Optionally, the control system is configured to move the emergency steering valve to the open state in order to direct the flow of hydraulic fluid from the secondary pump to the one or more steering cylinders for steering the working vehicle. Such an emergency steering valve provides a simple means of selectively connecting the secondary pump to the one or more steering cylinders in the back-up steering mode.

Optionally, the one or more steering cylinders are connected to the accumulator by an emergency steering valve having an open state and a closed state. Optionally, the control system is configured to actuate the emergency steering valve to the open state in order to direct hydraulic fluid from the accumulator to the one or more steering cylinders for steering the working vehicle. Such an emergency steering valve provides a simple means of selectively connecting the accumulator to the one or more steering cylinders in the back-up steering mode.

Optionally, the accumulator and secondary pump are both connected to the one or more steering cylinders via the same emergency steering valve. In this way, only a single valve has to be actuated in order to connect both alternative hydraulic fluid sources to the one or more steering cylinders.

Optionally, the secondary pump is connected to the accumulator upstream of the emergency steering valve, so that the secondary pump charges the accumulator when the emergency steering valve is in the closed state. In this way, the accumulator can be charged without a need for a dedicated charge pump.

Optionally, the emergency steering valve is biased towards the open state by a biasing force. This facilitates supply of hydraulic fluid from the accumulator and/or secondary pump when there is a loss of power in the system. For example, the emergency steering valve may be a fail-open valve.

Optionally, the emergency steering valve comprises a pressure port for connecting to a pressurised hydraulic fluid source to act against the biasing force and move the emergency steering valve towards the closed state. This provides a means for closing the emergency steering valve in the normal steering mode (i.e., when the primary pump is functioning normally).

Optionally, the pressure port is connected to the primary pump such that the emergency steering valve is moved to the closed state when the primary pump supplies hydraulic fluid at a greater pressure than the biasing force of the emergency steering valve. In this way, the emergency steering valve may automatically open in the event of a failure of the primary pump.

Optionally, the working vehicle is configured to operate the primary pump in a standby mode to supply hydraulic fluid at a standby pressure when no steering is demanded. Optionally, the standby pressure is greater than the biasing force of the emergency steering valve. In this way, the emergency steering valve may be automatically closed whenever the primary pump is functioning normally.

Optionally, the standby pressure is at least 10% greater than the biasing force, optionally at least 20% greater than the biasing force. By having the standby pressure at least 10% greater than the biasing force (e.g., at least 20% greater), the emergency steering valve may remain closed under normal fluctuations away from the nominal standby pressure (which would typically be less than 10% of the nominal standby pressure).

Optionally, the biasing force is in a range of about 15 bar to about 25 bar. Optionally, the standby pressure is in a range of about 20 bar to about 30 bar.

Optionally, the at least one hydraulic actuator is connected to the secondary pump via a control valve. Optionally, the control system is configured to open the control valve in order to direct the flow of hydraulic fluid from the secondary pump to the at least one hydraulic actuator to actuate the non-steering function of the working vehicle. This provides a simple means of selectively controlling flow of hydraulic fluid from the secondary pump to the at least one hydraulic actuator.

Optionally, the control valve is a directional control valve. A directional control valve facilitates two-way control of the associated hydraulic actuator (e.g., forward or reverse rotation of a hydraulic motor or reciprocating movement of a hydraulic cylinder).

Optionally, the control valve is a proportional directional control valve. A proportional directional control valve allows a rate of actuation of the associated hydraulic actuator (e.g., angular or linear velocity) to be varied as desired.

Optionally, the control system comprises a hydraulic pilot-operated control system having one or more pilot-operated valves for directing the flow of hydraulic fluid from the secondary pump. Such a pilot-operated control system may provide a cheaper and/or simpler configuration than alternatives, such as electrohydraulic control systems.

Optionally, the control system comprises an electrohydraulic control system having one or more electronic valves (e.g., solenoid-operated valves) for directing the flow of hydraulic fluid from the secondary pump. Optionally, the control system comprises a controller configured to actuate the one or more electronic valves.

For example, such an electrohydraulic control system may be provided instead of a pilot-operated control system or in addition (e.g., some parts of the system being controlled by pilot hydraulic fluid, and other parts of the system being controlled electronically). An electrohydraulic control system may provide a more flexible range of control functions than a pilot-operated alternative.

Optionally, the primary pump is a dedicated steering pump. For example, the primary pump may not be connectable to any other hydraulic devices for actuating non-steering functions of the working vehicle. This removes the need for a priority valve that may be required when a primary steering pump is also used to control other functions of the working vehicle.

Optionally, the at least one hydraulic actuator comprises at least one working arm cylinder for actuating a working arm of the working vehicle. Optionally, the secondary pump is selectively connectable to the at least one working arm cylinder to drive actuation thereof. In this way, the secondary pump can be used for another function when not required for steering the one or more steering cylinders.

Optionally, the at least one hydraulic actuator comprises a hydraulic slew motor for slewing a superstructure of the working vehicle relative to an undercarriage of the working vehicle. Optionally, the secondary pump is selectively connectable to the hydraulic slew motor to drive actuation thereof. In this way, the secondary pump can be used for another function when not required for steering the one or more steering cylinders.

Optionally, the at least one hydraulic actuator comprises a dozer cylinder configured for actuating a dozer blade of the working vehicle. Optionally, the secondary pump is selectively connectable to the dozer cylinder to drive actuation thereof. In this way, the secondary pump can be used for another function when not required for steering the one or more steering cylinders.

Optionally, the at least one hydraulic actuator comprises at least one stabiliser cylinder configured for actuating a stabiliser of the working vehicle. Optionally, the secondary pump is configured to drive actuation of the at least one stabiliser cylinder. In this way, the secondary pump can be used for another function when not required for steering the one or more steering cylinders.

Optionally, the primary pump and secondary pump are driven by the same energy source; optionally, by an internal combustion engine. This provides a simplified power arrangement in comparison to hybrid alternatives.

Optionally, the primary pump is driven by a first energy source and the secondary pump is driven by a second energy source different to the first energy source. Driving the secondary pump by a second energy source provides an alternative source of power in the event of a failure in the first energy source.

Optionally, the first or second energy source comprises an internal combustion engine and/or the second or first energy source comprises an electric energy storage device (e.g., battery) and an electric motor configured to be driven by the electric energy storage device.

Optionally, the working vehicle is a wheeled excavator.

A further aspect of the teachings provides a method of supplying a flow of hydraulic fluid to one or more steering cylinders of a working vehicle. The method may comprise operating a primary pump to supply a flow of hydraulic fluid to the one or more steering cylinders in a normal steering mode.

The method may comprise connecting an accumulator to the one or more steering cylinders to supply a flow of hydraulic fluid from the accumulator to the one or more steering cylinders for steering the working vehicle in a back-up steering mode. Such a method facilitates continuation of steering in the event of a complete power failure of the working vehicle. In addition, the accumulator may provide an instant flow of hydraulic fluid, in contrast to alternatives such as back-up pumps which may have a delay in ramping up output.

The method may comprise operating a secondary pump to supply a flow of hydraulic fluid to the one or more steering cylinders to steer the working vehicle in a back-up steering mode. Such a method facilitates continuation of steering over a longer period of time than alternatives, such as an accumulator. This may be useful, for example, for returning the working vehicle to a maintenance centre as opposed to just getting the working vehicle into a safe position (e.g., at a side of a road).

The method may comprise:
connecting an accumulator to the one or more steering cylinders to supply a flow of hydraulic fluid from the accumulator to the one or more steering cylinders to steer the working vehicle in a back-up steering mode; and
operating a secondary pump to supply a flow of hydraulic fluid to the one or more steering cylinders to steer the working vehicle in the back-up steering mode.

By supplying hydraulic fluid from both the accumulator and the secondary pump in the back-up steering mode, such a method can provide an instant source of pressurised hydraulic fluid (from the accumulator) while output from the secondary pump is increased, and then the secondary pump can continue to provide a back-up flow of hydraulic fluid over a longer time period.

The method may comprise simultaneously directing the flow of hydraulic fluid from the secondary pump to at least one hydraulic actuator to actuate a non-steering function of the working vehicle in the back-up steering mode.

Such a method allows less pumps to be used than in alternative configurations (e.g., in which the secondary pump is a dedicated back-up steering pump that does not drive any other actuators).

### BRIEF DESCRIPTION OF DRAWINGS

Embodiments will now be described by way of example only with reference to the accompanying figures, in which:
Figure 1 is a side view of a working vehicle, according to an embodiment of the invention;
Figure 2 is a plan view of the working vehicle of Figure 1;
Figure 3 is a schematic view of a hydraulic system of the working vehicle of Figures 1 and 2 in a normal steering mode;
Figure 4 is a schematic view of the hydraulic system of Figure 3 in a back-up steering mode; and
Figure 5 is a flow chart of a method of supplying a flow of hydraulic fluid to one or more steering cylinders of a working vehicle, according to an embodiment of the invention.

### DETAILED DESCRIPTION

In the following detailed description, numerous specific details are set forth in order to provide a thorough understanding of various embodiments and the teachings. However, those skilled in the art will understand that: the present teachings may be practiced without these specific details or with known equivalents of these specific details; that the present teachings are not limited to the described embodiments; and, that the present teachings may be practiced in a variety of alternative embodiments. It will also be appreciated that well known methods, procedures, components, and systems may not have been described in detail.

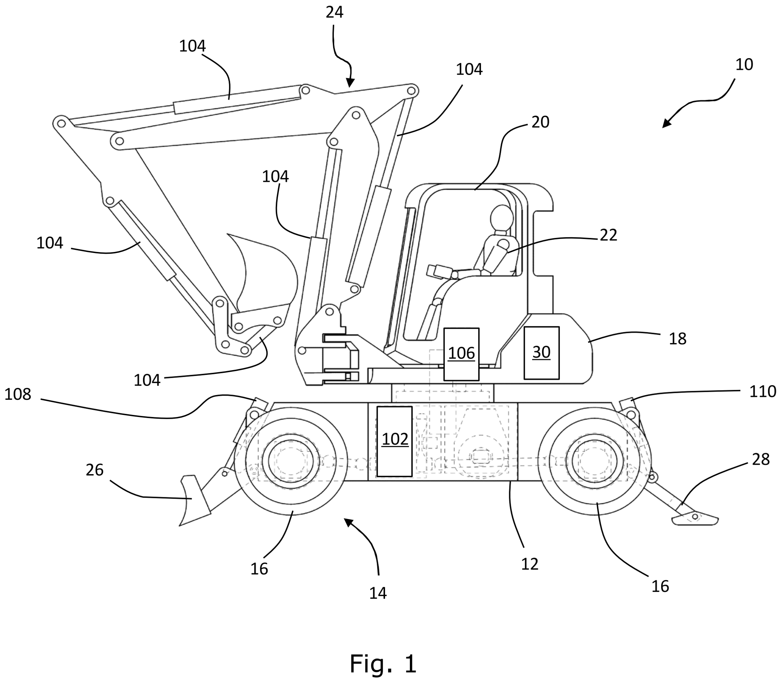

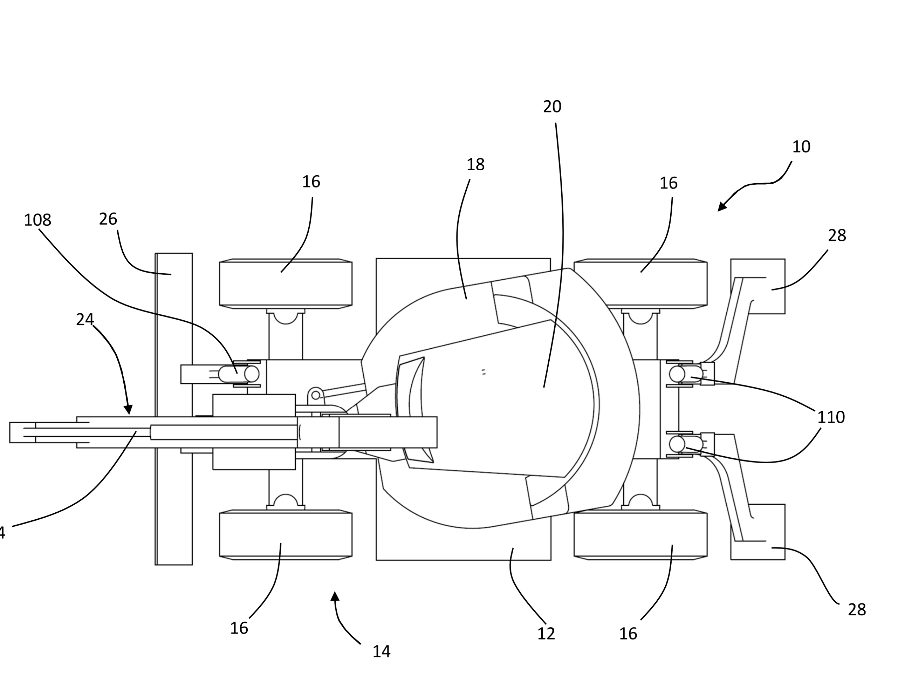

With reference to Figures 1 and 2, a working vehicle is indicated at 10. The illustrated working vehicle 10 is of the kind known as a wheeled excavator. In other embodiments, the working vehicle 10 may be another type of working vehicle (e.g., a materials handling vehicle such as a telescopic handler, a backhoe loader, a tracked excavator, a site dumper, etc.).

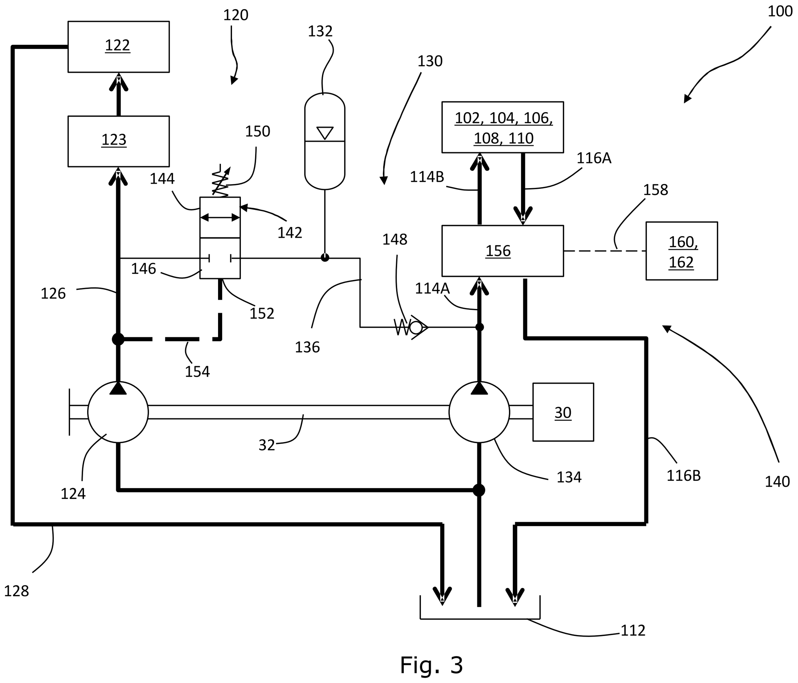

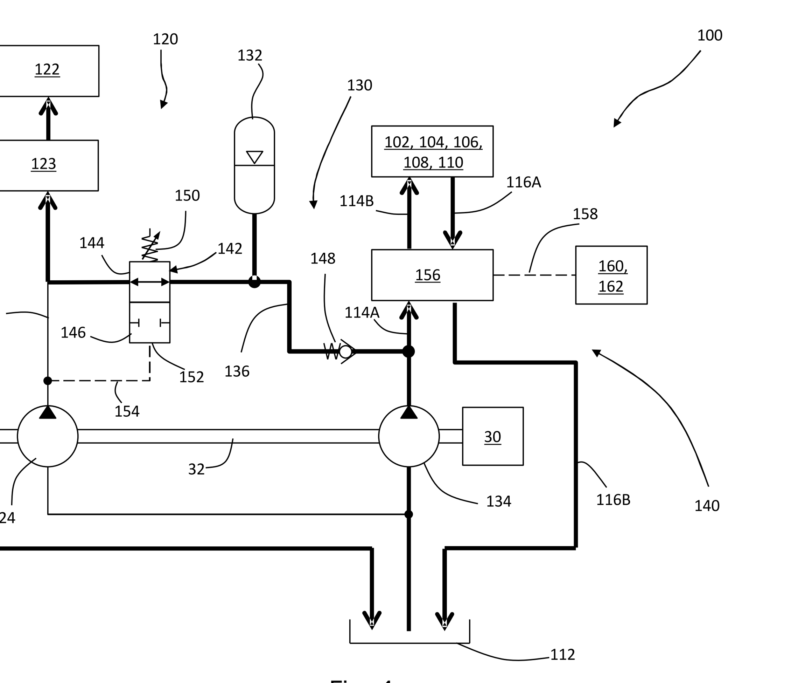

The illustrated working vehicle 10 has an undercarriage 12 which includes a ground-engaging propulsion structure 14. A hydraulic drive motor 102 is provided for propelling the working vehicle 10. In other words, the hydraulic drive motor 102 is provided for actuating a propulsion function of the working vehicle 10. Such a propulsion function may be considered as a "non-steering function" of the working vehicle 10. The hydraulic drive motor 102 is part of a hydraulic system 100 of the working vehicle 10, which will be described in more detail below with reference to Figures 3 and 4.

In the illustrated embodiment, the ground-engaging propulsion structure is provided by four wheels 16. The hydraulic drive motor 102 is configured to drive at least some of the four wheels 16. Other numbers of wheels 16 and/or other types of propulsion structure (e.g., tracks) may be provided in other embodiments.

The working vehicle 10 also has a superstructure 18 provided above the undercarriage 12. The superstructure 18 has an operator cab 20 in which an operator 22 can sit to control the working vehicle 10.

A working arm 24 is coupled to the superstructure 18. The working arm 24 can be actuated by one or more working arm cylinders 104 of the hydraulic system 10 to perform a working arm operation (e.g., an excavating operation). In other words, the working arm cylinders 104 are associated with movement of the working arm 24. Such a movement of the working arm 24 may be considered as a "working function" or a "non-steering function" of the working vehicle 10.

A hydraulic slew motor 106 is provided for slewing the superstructure 18 relative to the undercarriage 12 of the working vehicle 10. The hydraulic slew motor 106 is part of the hydraulic system 100. The slewing movement provided by the hydraulic slew motor 106 may be considered as a "working function" or a "non-steering function" of the working vehicle 10.

In the illustrated embodiment, the working vehicle 10 includes a dozer blade 26 coupled to the undercarriage 12. The dozer blade 26 can be actuated by a dozer cylinder 108 to perform a dozing operation. In other words, the dozer cylinder 108 is associated with movement of the dozer blade 26. Such a movement of the dozer blade 26 may be considered as a "working function" or a "non-steering function" of the working vehicle 10.

In the illustrated embodiment, the working vehicle 10 includes one or more stabilisers 28. In particular, two stabilisers 28 are provided in the illustrated embodiment. The stabilisers may be deployed (e.g., in combination with the dozer blade 26) to engage a ground surface outboard of the wheels 16 to reduce the likelihood of tipping during working operations carried out with the working arm 24. The stabilisers 28 can be actuated by stabiliser cylinders 110 (e.g., to move between a deployed state, as illustrated in Figures 1 and 2, and a stowed state). In other words, the stabiliser cylinders 110 are associated with movement of the stabilisers 28. Such a movement of the stabilisers 28 may be considered as a "working function" or a "non-steering function" of the working vehicle 10.

The working vehicle 10 has an internal combustion engine 30 (illustrated schematically on Figure 1). In the illustrated embodiment, the internal combustion engine 30 is shown as part of the superstructure 18. In alternative embodiments, the internal combustion engine 30 is part of the undercarriage 12. The internal combustion engine 30 provides an energy source for driving the hydraulic system 100 to move the hydraulic drive motor 102, working arm cylinders 104, slew motor 106, dozer cylinder 108 and/or stabiliser cylinders 110, as will be described in more detail below. In alternative embodiments, a different energy source may be provided instead of or in addition to the internal combustion engine 30 (e.g., a battery and an electric motor driven by the battery).

Referring now to Figures 3 and 4, the hydraulic system 100 of the working vehicle 10 will be described in more detail.

The hydraulic system 100 includes a steering system 120 having one or more steering cylinders 122. The one or more steering cylinders 122 are illustrated schematically on Figures 3 and 4. However, it will be understood that various known steering cylinder configurations may be used. For example, the one or more steering cylinders 122 may include one double-acting steering cylinder 122, or a pair of left and right steering cylinders 122. Each of the one or more steering cylinders 122 may be coupled between a fixed portion of an axle and a wheel hub associated with the corresponding wheel 16, such that extension and retraction of the steering cylinder 122 changes the steering angle of the associated wheel 16.

The steering system 120 has a primary pump 124 for supplying hydraulic fluid to the one or more steering cylinders 122 in a normal steering mode. In particular, in the normal steering mode illustrated in Figure 3, the primary pump 124 draws hydraulic fluid from a hydraulic fluid reservoir 112, and delivers a flow of pressurised hydraulic fluid to the one or more steering cylinders 122 via a primary steering feed line 126. A steering valve 123 (e.g., a steering orbitrol valve) is provided between the primary steering feed line 126 and the one or more steering cylinders 122. The steering valve 123 is controlled by one or more steering inputs (e.g., a steering wheel) to control steering as desired.

Hydraulic fluid which is expelled from the one or more steering cylinders 122 is returned to the hydraulic fluid reservoir 112 via a steering return line 128. For example, hydraulic fluid may be expelled from a head side chamber of the steering cylinder 122 as the steering cylinder 122 retracts, or from a rod side chamber of the steering cylinder 122 as the steering cylinder 122 extends, and then returned to the hydraulic fluid reservoir 112 via the steering return line 128.

The steering system 120 also has a back-up system 130 for supplying hydraulic fluid to the one or more steering cylinders 122 in a back-up steering mode. In the illustrated embodiment, the back-up system 130 includes an accumulator 132 for providing a first alternative hydraulic fluid source for the one or more steering cylinders 122. The back-up system 130 also includes a secondary pump 134 for providing a second alternative hydraulic fluid source for the one or more steering cylinders 122. In other embodiments, only one of the accumulator 132 and secondary pump 134 may be configured for providing an alternative hydraulic fluid source in the back-up steering mode. For example, the accumulator 132 may be omitted or the secondary pump 134 may not be connectable to the one or more steering cylinders 122.

As will be described in more detail below, in the back-up steering mode (illustrated in Figure 4) the secondary pump 134 draws hydraulic fluid from the hydraulic fluid reservoir 112 and delivers a flow of pressurised hydraulic fluid to the one or more steering cylinders 122 via a secondary steering feed line 136. The steering valve 123 is provided between the secondary steering feed line 136 and the one or more steering cylinders 122, in order to control steering as desired in the back-up steering mode.

In the back-up steering mode, hydraulic fluid returns from the one or more steering cylinders 122 to the hydraulic fluid reservoir 112 via the steering return line 128 in the same way as in the normal mode, described above.

The working vehicle 10 has a control system 140. In this context, the term "control system" will be understood to mean a collection of components which can be used to control flows of hydraulic fluid in the hydraulic system 100. This may include manual control and/or automatic control elements. For example, manual control elements may include valves which are moved in response to actuation of a user input (e.g., a lever, joystick, switch, button etc.). For example, automatic control elements may include valves which are moved automatically in response to changing operating conditions of the hydraulic system 100 (e.g., via a change in pilot pressure acting on the valve, and/or via a change in control signal sent to the valve from a controller 162).

In the illustrated embodiment, the control system 140 is configured in the back-up steering mode for simultaneously directing a flow of hydraulic fluid from the secondary pump 134 to the one or more steering cylinders 122 (e.g., via the secondary feed line 136) and to at least one of: the hydraulic drive motor 102, the one or more working arm cylinders 104, the hydraulic slew motor 106, the dozer cylinder 108, and/or the stabiliser cylinders 110. In this way, the control system 140 is configured in the back-up steering mode for simultaneously steering and actuating a non-steering function of the working vehicle 10 using the flow of hydraulic fluid supplied by the secondary pump 134.

For example, in some embodiments the control system 140 is configured in the back-up steering mode for simultaneously directing the flow of hydraulic fluid from the secondary pump 134 to the one or more steering cylinders 122 and the hydraulic drive motor 102 for propelling and steering the working vehicle 10 at the same time. This ensures that the working vehicle 10 can be steered whenever it is moving (i.e., in the operating conditions in which steering is required).

In some embodiments, the control system 140 is configured to inhibit flow of hydraulic fluid from the secondary pump 134 to the one or more working arm cylinders 104 and/or the hydraulic slew motor 106 and/or the dozer cylinder 108 and/or the stabiliser cylinders 110 when the flow of hydraulic fluid is being directed to the one or more steering cylinders 122 in the back-up steering mode. In this way, steering and propulsion of the working vehicle 10 can be prioritised in the event of a failure of the primary pump 124 (e.g., to facilitate returning the working vehicle 10 to a maintenance site for repair of the primary pump 124).

In the illustrated embodiment, the control system 140 includes an emergency steering valve 142 having an open state 144 and a closed state 146. The one or more steering cylinders 122 are connected to the secondary pump 134 and the accumulator 132 by the emergency steering valve 142. As will be described in more detail below, the control system 140 is configured to move the emergency steering valve 142 to the open state 144 to direct hydraulic fluid from the accumulator 132 and the secondary pump 134 to the one or more steering cylinders 122 in the back-up steering mode.

In the illustrated embodiment, the secondary pump 134 is connected to the accumulator 132 upstream of the emergency steering valve 142 (i.e. at a portion of the secondary steering feed line 136 upstream of the emergency steering valve 142). In this way, the secondary pump 134 charges the accumulator 132 when the emergency steering valve 142 is in the closed state 146. A check valve 148 is provided between the secondary pump 134 and the accumulator 132 (i.e., in the secondary steering feed line 136) to inhibit backflow from the accumulator 132 to the secondary pump 134. This facilitates maintaining the accumulator 132 at an elevated pressure even when the secondary pump 134 is in a low output condition (e.g., an idle condition).

In the illustrated embodiment, the emergency steering valve 142 is biased towards the open state 144 by a biasing force. In particular, a biasing element 150 (e.g., a spring) may be included to provide the biasing force.

In the illustrated embodiment, the emergency steering valve 142 has a pressure port 152 for connecting to a pressurised hydraulic fluid source to act against the biasing force and move the emergency steering valve 142 towards the closed state 146. In other words, the portion of the control system 140 which actuates the emergency steering valve 142 is a hydraulic pilot-operated control system.

In other embodiments, the emergency steering valve 142 may be an electronic valve (e.g., a solenoid-operated valve) actuated by a control signal from a controller. In other words, the portion of the control system 140 which actuates the emergency steering valve 142 may be an electrohydraulic control system.

In the illustrated embodiment, the pressure port 152 of the emergency steering valve 142 is connected to the primary pump 124 (e.g., by a pilot line 154 which branches off from the primary steering feed line 126). In this way, the emergency steering valve 142 is automatically moved to the closed state 146 when the primary pump 124 supplies hydraulic fluid (via the pilot line 154) at a greater pressure than the biasing force of the emergency steering valve 142. In addition, the emergency steering valve 142 will automatically be moved to the open state 144 in the event of a failure of the primary pump 124 (i.e., when pressure in the pilot line 154 drops below that of the biasing force of the emergency steering valve 142).

The working vehicle 10 may be configured to operate the primary pump 124 in a standby mode to supply hydraulic fluid at a standby pressure when no steering is demanded. The standby pressure may be greater than the biasing force of the emergency steering valve 142. For example, the standby pressure may be at least 10% greater than the biasing force of the emergency steering valve 142, e.g., at least 20% greater. In this way, the emergency steering valve 142 may remain closed under normal fluctuations away from the nominal standby pressure (which would typically be less than 10% of the nominal standby pressure). In some embodiments, the biasing force may be in a range of about 15 bar to about 25 bar (e.g., around 20 bar). In some embodiments, the standby pressure may be in a range of about 20 bar to about 30 bar (e.g., around 25 bar).

The control system 140 includes a plurality of control valves 156. Each of the hydraulic drive motor 102, working arm cylinders 104, hydraulic slew motor 106, dozer cylinder 108 and stabiliser cylinders 110 are connected to the secondary pump 134 via a respective one of the control valves 156.

The control system 140 is configured to open one or more of the control valves 156 in order to direct the flow of hydraulic fluid from the secondary pump 134 to the respective hydraulic actuator(s) 102, 104, 106, 108, 110 (i.e., to actuate the respective non-steering function(s) of the working vehicle 10). In this way, the secondary pump 134 is selectively connectable to each of the hydraulic drive motor 102, working arm cylinders 104, hydraulic slew motor 106, dozer cylinder 108 and stabiliser cylinders 110 to drive actuation thereof.

The control valves 156 may be directional control valves (e.g., proportional directional control valves). The control valves 156 may be provided as part of a common valve block (e.g., as indicated schematically on Figures 3 and 4), or as separate valve blocks.

When one of the control valves 156 is open, hydraulic fluid from the secondary pump 134 may flow along a first actuator feed line 114A from the secondary pump 134 to the control valve 156, and then along a second actuator feed line 114B to the respective hydraulic actuator 102, 104, 106, 108, 110. Hydraulic fluid which is expelled from the respective hydraulic actuator 102, 104, 106, 108, 110 may return via a first actuator return line 116A to the control valve 156 and then via a second actuator return line 116B to the hydraulic fluid reservoir 112.

It will be understood that, when the control valves 156 are directional control valves, the second actuator feed line 114B and first actuator return line 116A will switch depending on the direction that the control valve 156 is moved. It will also be understood that, although only a single second actuator feed line 114B and first actuator return line 116A are illustrated in the schematic diagram of Figures 3 and 4, there would be a plurality of second actuator feed lines 114B and first actuator return lines 116A corresponding to the number of hydraulic actuators 102, 104, 106, 108, 110 in the hydraulic system 100.

The control valves 156 may each be actuated by receiving an input along one or more corresponding control lines 158 (illustrated schematically on Figures 3 and 4). For example, the control valves 156 may be pilot-operated valves and the control lines 158 may be pilot control lines which receive pressurised hydraulic fluid from a pilot fluid source 160. In other words, the portion of the control system 140 which actuates the control valves 156 may be a hydraulic pilot-operated control system.

Alternatively, the control valves 156 may be electronic valves (e.g., solenoid-operated valves) and the control lines 158 may be electronic signal lines which receive a control signal from a controller 162. In other words, the portion of the control system 140 which actuates the control valves 156 may be an electrohydraulic control system. In such embodiments, the controller 162 may comprise: control circuitry; and/or processor circuitry; and/or at least one application specific integrated circuit (ASIC); and/or at least one field programmable gate array (FPGA); and/or single or multi-processor architectures; and/or sequential/parallel architectures; and/or at least one programmable logic controllers (PLCs); and/or at least one microprocessor; and/or at least one microcontroller; and/or a central processing unit (CPU), to perform the described methods. The controller 162 may include an associated memory or the memory may be located locally to the controller 162 or remotely. The memory may be a non-volatile flash memory.

In the illustrated embodiment, the primary pump 124 is a dedicated steering pump. In particular, the primary pump 124 is not connectable to any other hydraulic devices 102, 104, 106, 108, 110 for actuating non-steering functions of the working vehicle 10.

In the illustrated embodiment, the primary pump 124 and the secondary pump 134 are driven by the same energy source. In particular, the primary pump 124 and secondary pump 134 are both driven by the internal combustion engine 30 of the working vehicle 10 (e.g., via a common drive shaft 32).

In alternative embodiments, the primary pump 124 may be driven by a first energy source (e.g., an internal combustion engine or battery-powered electric motor) and the secondary pump 134 may be driven by a second energy source different to the first energy source (e.g., a different internal combustion engine or battery-powered electric motor).

It will be understood that the schematic diagrams of Figures 3 and 4 are simplified diagrams, but that the hydraulic system 100 may include various other components such as flow restrictors, valves, filters, additional pumps, additional actuators, pilot control components, electrohydraulic control components, further hydraulic fluid lines, etc., to facilitate control of the hydraulic system 100. For example, one or more pressure relief valves may be provided for returning hydraulic fluid supplied by the primary pump 124 and/or secondary pump 134 to the hydraulic fluid reservoir 112 when the steering valve 123 and/or control valves 156 are closed.

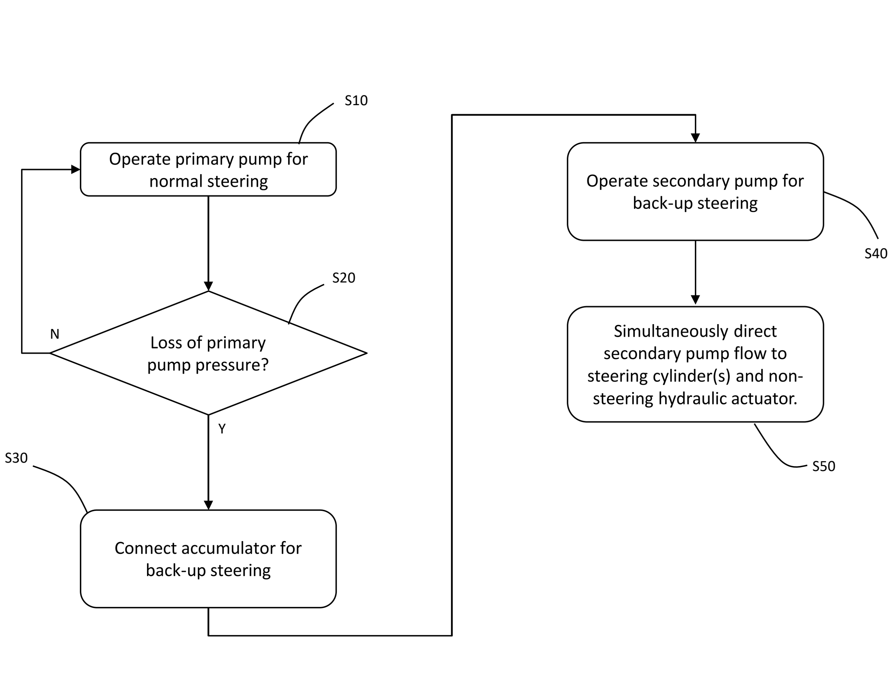

Referring now to Figure 5, a method of supplying a flow of hydraulic fluid to one or more steering cylinders 122 of a working vehicle 10 is illustrated as a flow chart. The method comprises the following steps:
operating a primary pump 124 to supply a flow of hydraulic fluid to the one or more steering cylinders 122 to steer the working vehicle 10 in a normal steering mode (at step S10);
connecting an accumulator 132 to the one or more steering cylinders 122 to supply a flow of hydraulic fluid from the accumulator 132 to the one or more steering cylinders 122 to steer the working vehicle 10 in a back-up steering mode (at step S30);
operating a secondary pump 134 to supply a flow of hydraulic fluid to the one or more steering cylinders 122 to steer the working vehicle 10 in the back-up steering mode (at step S40); and
simultaneously directing the flow of hydraulic fluid from the secondary pump 134 to at least one hydraulic actuator 102 to actuate a non-steering function of the working vehicle 10 in the back-up steering mode (at step S50).

In Figure 5, the method includes step S20 of checking for loss of primary pump pressure. Step S20 may be a passive method step (e.g., involving an automated mechanism for switching from step S10 to step S30 when there is a loss of primary pump pressure, as in the embodiment of Figures 3 and 4 described above). Alternatively, step S20 may be an active method step (e.g., involving measuring primary pump pressure and making an active decision on whether to proceed to step S30 or return to step S10, for example using a controller 162).

The one or more embodiments are described above by way of example only and it will be appreciated that variations are possible without departing from the scope of protection afforded by the appended claims.

It should also be noted that whilst the appended claims set out particular combinations of features described above, the scope of the present disclosure is not limited to the particular combinations hereafter claimed, but instead extends to encompass any combination of features herein disclosed.

## Claims

1. A working vehicle comprising:
at least one hydraulic actuator for actuating a non-steering function of the working vehicle; and
a steering system comprising one or more steering cylinders, a primary pump for supplying hydraulic fluid to the one or more steering cylinders in a normal steering mode, and a back-up system for supplying hydraulic fluid to the one or more steering cylinders in a back-up steering mode;
wherein the back-up system comprises an accumulator for providing a first alternative hydraulic fluid source for the one or more steering cylinders, and a secondary pump for providing a second alternative hydraulic fluid source for the one or more steering cylinders;
wherein the working vehicle comprises a control system configured in the back-up steering mode for simultaneously directing a flow of hydraulic fluid from the secondary pump to the one or more steering cylinders and to the at least one hydraulic actuator for simultaneously steering and actuating the non-steering function of the working vehicle.

2. The working vehicle of claim 1, wherein the non-steering function comprises a propulsion function of the working vehicle, and wherein the at least one hydraulic actuator comprises a hydraulic drive motor for propelling the working vehicle.

3. The working vehicle of claim 2, wherein the working vehicle comprises one or more working mode hydraulic actuators associated with movement of a working arm of the working vehicle and/or slewing a superstructure of the working vehicle relative to an undercarriage of the working vehicle and/or movement of a dozer blade of the working vehicle and/or movement of a stabiliser of the working vehicle, and wherein the control system is configured to inhibit flow of hydraulic fluid from the secondary pump to the one or more working mode hydraulic actuators when the flow of hydraulic fluid is being directed to the one or more steering cylinders in the back-up steering mode.

4. The working vehicle of any preceding claim, wherein the one or more steering cylinders are connected to the secondary pump by an emergency steering valve having an open state and a closed state, and wherein the control system is configured to move the emergency steering valve to the open state in order to direct the flow of hydraulic fluid from the secondary pump to the one or more steering cylinders for steering the working vehicle.

5. The working vehicle of any preceding claim, wherein the one or more steering cylinders are connected to the accumulator by an emergency steering valve having an open state and a closed state, and wherein the control system is configured to actuate the emergency steering valve to the open state in order to direct hydraulic fluid from the accumulator to the one or more steering cylinders for steering the working vehicle.

6. The working vehicle of claims 4 and 5, wherein the accumulator and secondary pump are both connected to the one or more steering cylinders via the same emergency steering valve; optionally, wherein the secondary pump is connected to the accumulator upstream of the emergency steering valve, so that the secondary pump charges the accumulator when the emergency steering valve is in the closed state.

7. The working vehicle of any of claims 4 to 6, wherein the emergency steering valve is biased towards the open state by a biasing force; optionally, wherein the emergency steering valve comprises a pressure port for connecting to a pressurised hydraulic fluid source to act against the biasing force and move the emergency steering valve towards the closed state; optionally, wherein the pressure port is connected to the primary pump such that the emergency steering valve is moved to the closed state when the primary pump supplies hydraulic fluid at a greater pressure than the biasing force of the emergency steering valve; optionally, wherein the working vehicle is configured to operate the primary pump in a standby mode to supply hydraulic fluid at a standby pressure when no steering is demanded, and wherein the standby pressure is greater than the biasing force of the emergency steering valve; optionally, wherein the standby pressure is at least 10% greater than the biasing force, optionally at least 20% greater than the biasing force; optionally, wherein the biasing force is in a range of about 15 bar to about 25 bar, and/or wherein the standby pressure is in a range of about 20 bar to about 30 bar.

8. The working vehicle of any preceding claim, wherein the at least one hydraulic actuator is connected to the secondary pump via a control valve, and wherein the control system is configured to open the control valve in order to direct the flow of hydraulic fluid from the secondary pump to the at least one hydraulic actuator to actuate the non-steering function of the working vehicle; optionally, wherein the control valve is a directional control valve; optionally a proportional directional control valve.

9. The working vehicle of any preceding claim, wherein the control system comprises a hydraulic pilot-operated control system having one or more pilot-operated valves for directing the flow of hydraulic fluid from the secondary pump.

10. The working vehicle of any preceding claim, wherein the control system comprises an electrohydraulic control system having one or more electronic valves (e.g., solenoid-operated valves) for directing the flow of hydraulic fluid from the secondary pump, and a controller configured to actuate the one or more electronic valves.

11. The working vehicle of any preceding claim, wherein the primary pump is a dedicated steering pump.

12. The working vehicle of any preceding claim, wherein:
the at least one hydraulic actuator comprises at least one working arm cylinder for actuating a working arm of the working vehicle, wherein the secondary pump is selectively connectable to the at least one working arm cylinder to drive actuation thereof; and/or
the at least one hydraulic actuator comprises a hydraulic slew motor for slewing a superstructure of the working vehicle relative to an undercarriage of the working vehicle, wherein the secondary pump is selectively connectable to the hydraulic slew motor to drive actuation thereof; and/or
the at least one hydraulic actuator comprises a dozer cylinder configured for actuating a dozer blade of the working vehicle, wherein the secondary pump is selectively connectable to the dozer cylinder to drive actuation thereof; and/or
the at least one hydraulic actuator comprises at least one stabiliser cylinder configured for actuating a stabiliser of the working vehicle, wherein the secondary pump is configured to drive actuation of the at least one stabiliser cylinder.

13. The working vehicle of any preceding claim, wherein the primary pump and secondary pump are driven by the same energy source, optionally, by an internal combustion engine; or wherein the primary pump is driven by a first energy source and the secondary pump is driven by a second energy source different to the first energy source, optionally, wherein the first or second energy source comprises an internal combustion engine and/or wherein the second or first energy source comprises an electric energy storage device (e.g., battery) and an electric motor configured to be driven by the electric energy storage device.

14. The working vehicle of any preceding claim, wherein the working vehicle is a wheeled excavator.

15. A method of supplying a flow of hydraulic fluid to one or more steering cylinders of a working vehicle, the method comprising:
operating a primary pump to supply a flow of hydraulic fluid to the one or more steering cylinders to steer the working vehicle in a normal steering mode;
connecting an accumulator to the one or more steering cylinders to supply a flow of hydraulic fluid from the accumulator to the one or more steering cylinders to steer the working vehicle in a back-up steering mode;
operating a secondary pump to supply a flow of hydraulic fluid to the one or more steering cylinders to steer the working vehicle in the back-up steering mode; and
simultaneously directing the flow of hydraulic fluid from the secondary pump to at least one hydraulic actuator to actuate a non-steering function of the working vehicle in the back-up steering mode.
